# EUROPÄISCHE PATENTANMELDUNG

(11) **EP 4 792 965 A1**
(43) Veröffentlichungstag der Anmeldung: **19.08.2026**
(21) Anmeldenummer: 25157945.4
(22) Anmeldetag: 14.02.2025
(51) Int. Cl.: B23K 9/10

(54) **SCHWEISSSTROMQUELLE**

(71) Anmelder: FRONIUS INTERNATIONAL GmbH, 4643 Pettenbach (AT)
(72) Erfinder: Itzenberger, Daniel, 4643 Pettenbach (AT); Prinz, Andreas, 4643 Pettenbach (AT); Forstner, Christoph, 4643 Pettenbach (AT)
(74) Vertreter: Weiss Patentanwalts GmbH

(57) **Zusammenfassung**

Die Erfindung betrifft eine Schweißstromquelle (1) mit einem Eingangsanschluss (10) und einem Ausgangsanschluss (9). Um die Verlustleistung einer Schweißstromquelle (1) zu verringern und die Sicherheit einer Schweißstromquelle (1) zu erhöhen, ist vorgesehen, dass in zumindest einer der elektrischen Ausgangsleitungen (AL1, AL2) der Schweißstromquelle (1) ein Schalter (S1, S2) vorgesehen ist, wobei parallel zum Schalter (S1, S2) ein Pufferkondensator (C_{P}) geschaltet ist, wobei in der Schweißstromquelle (1) ein Stromrichter (11) vorgesehen ist, der eingerichtet ist, elektrische Energie von einem ersten Anschluss (A1) des Stromrichters (11) zu einem zweiten Anschluss (A2) des Stromrichters (11) zu übertragen und der erste Anschluss (A1) des Stromrichters (11) mit dem Pufferkondensator (C_{P}) verbunden ist, und der zweite Anschluss (A2) des Stromrichters (11) mit den elektrischen Eingangsleitungen (EL1, EL2) der Schweißstromquelle (1) verbunden ist.

## Beschreibung

Die gegenständliche Erfindung betrifft eine Schweißstromquelle mit einem Eingangsanschluss und einem Ausgangsanschluss, wobei bei Verwendung der Schweißstromquelle an den Eingangsanschluss eine Spannungsquelle und an den Ausgangsanschluss über eine Schweißleitung ein Schweißbrenner anschließbar ist, wobei in der Schweißstromquelle ein Schweißleistungsteil vorgesehen ist, das ein Schweißleistungsteileingang des Schweißleistungsteils eingangsseitig über elektrische Eingangsleitungen mit dem Eingangsanschluss der Schweißstromquelle verbunden ist und ein Schweißleistungsteilausgang des Schweißleistungsteils ausgangsseitig über elektrische Ausgangsleitungen mit dem Ausgangsanschluss der Schweißstromquelle verbunden ist, wobei in zumindest einer der elektrischen Ausgangsleitungen ein Schalter vorgesehen ist, wobei parallel zum Schalter ein Pufferkondensator geschaltet ist, wobei in der Schweißstromquelle ein Stromrichter vorgesehen ist, der eingerichtet ist, elektrische Energie von einem ersten Anschluss des Stromrichters zu einem zweiten Anschluss des Stromrichters zu übertragen und der erste Anschluss mit dem Pufferkondensator verbunden ist. Die Erfindung betrifft auch ein Verfahren zur Durchführung eines Schweißprozesses mit einer solchen Schweißstromquelle.

Es sind verschiedene Lichtbogenschmelzschweißverfahren bekannt, wie beispielsweise das MIG (Metall Inertgas)-, MAG (Metall Aktivgas)-, WIG (Wolframinertgas)-, MMA (manual metal arc)-, WAAM (wire arc additive manufacturing)- oder Plasmaschweißen. Beim MIG-, MAG-, MMA-, und WAAM-Schweißen wird eine abschmelzende Elektrode verwendet, die gleichzeitig als Schweißzusatzwerkstoff dient. Beim WIG- und Plasmaschweißen wird eine nichtabschmelzende Elektrode verwendet und ein Schweißzusatzwerkstoff wird beim Schweißen dem Lichtbogen bedarfsweise separat zugeführt. Zudem wird bei einigen dieser Schweißverfahren in bekannter Weise der Schweißstelle ein Schutzgas zugeführt, um die Schweißstelle von der Umgebungsluft abzuschirmen.

Bei allen Schweißverfahren kommt eine Schweißstromquelle zum Einsatz, an die der jeweilige Schweißbrenner angeschlossen ist. Die Schweißstromquelle erzeugt den benötigten Schweißstrom und die benötigte Schweißspannung zum Durchführen eines Schweißprozesses. Die Hauptaufgabe einer Schweißstromquelle zur Durchführung eines Schweißprozesses besteht somit darin, die Prozessgrößen Schweißstrom und/oder Schweißspannung und gegebenenfalls auch Schweißdrahtvorschub in Abhängigkeit von der Schweißaufgabe derart zu erzeugen, steuern und zu regeln, dass schlussendlich ein gutes Schweißergebnis mit erwünschter Schweißnahtqualität, und damit eine gute Schweißverbindung, erzeugt wird. Mit jedem Schweißverfahren können unterschiedliche Schweißprozesse realisiert werden, wobei ein Schweißprozess im Wesentlichen durch einen bestimmten zeitlichen Verlauf des Schweißstromes du/oder der Schweißspannung, und gegebenenfalls auch des Schweißdrahtvorschubes, gekennzeichnet ist.

Der Schweißbrenner ist in der Regel über eine Schweißleitung mit der Schweißstromquelle verbunden. Die Schweißleitung, bestehend aus Schweißstromleitung (die von der Schweißstromquelle zum Schweißbrenner bzw. zur Schweißelektrode hinführende Leitung) und Rückleitung (die vom Werkstück zur Schweißstromquelle zurückführende Leitung), verbindet die Schweißstromquelle mit dem Schweißbrenner, also mit der Schweißelektrode, und dem Werkstück.

Die Schweißleitung kann dabei sehr lange sein und ist in der Regel in der Größenordnung von 1 Meter bis 100 Meter, beispielsweise 50m, wobei Standardlängen bei ca. 8m liegen. Die Schweißleitung hat damit eine bestimmte Induktivität, die einen elektrischen Energiespeicher darstellt. Während des Schweißprozesses wird somit elektrische Energie in der Leitungsinduktivität gespeichert. Es gibt Schweißprozesse, die ein sehr schnelles Absinken des Schweißstromes erfordern. Das kann beispielsweise bei einem Schweißprozess auftreten, bei dem sich Kurzschlussphasen und Lichtbogenphasen abwechseln. Ein Lichtbogenabriss, bei dem der Schweißstromkreis unterbrochen ist, ist während des Schweißens in der Regel unerwünscht. Eine Kurzschlussphase ist eine Zeitspanne, während der die Schweißelektrode elektrisch leitend mit dem Werkstück bzw. dem Schweißbad am Werkstück verbunden ist. Eine Lichtbogenphase ist eine Zeitspanne, während der zwischen der Schweißelektrode und dem Werkstück bzw. dem Schweißbad am Werkstück ein Lichtbogen brennt. Das kommt beispielsweise beim MIG oder MAG-Schweißen mit einem Kurzlichtbogen-Schweißprozess (Short-Arc-Weding) oder einem CMT (Cold Metal Transfer) Schweißprozess vor. Ebenso kann es beim Schweißen mit einer Wechselspannung beim Umpolen der Schweißspannung erwünscht sein, dass der Schweißstrom sehr rasch absinkt. Das kommt beispielsweise beim WIG-Schweißen vor. Abgesehen davon, kann die in der Schweißleitung gespeicherte elektrische Energie auch ein Sicherheitsproblem sein, weil sich die elektrische Energie bei (unbeabsichtigten) Kontakt der Schweißelektrode entladen kann.

Ein Schweißprozess besteht in der Regel aus aufeinanderfolgenden Schweißzyklen, wobei sich die Schweißzyklen typischerweise mit einer Frequenz im Größenordnungsbereich von 10 Hz bis 100 Hz wiederholen. In jedem Schweißzyklus muss damit die in der Schweißleitung gespeicherte elektrische Energie abgeführt werden. Bisher erfolgte das häufig dadurch, dass die überschüssige Energie in der Schweißleitung über einen zuschaltbaren Widerstand abgebaut wurde. Die elektrische Energie wurde damit in Wärme umgewandelt. Das führte zum einen zu einer starken Erwärmung der Schweißstromquelle und zum anderen führte das zu hohen elektrischen Verlusten mit Verlustleistungen im Größenordnungsbereich von 100W bis 1000W.

Eine Verbesserung gegenüber dem Abbau der Energie über einen Widerstand ist in der WO 2022/185161 A1 gezeigt. Hier wird die in der Schweißleitung gespeicherte elektrische Energie zuerst in einen Pufferkondensator geladen und dann aus dem Pufferkondensator wieder dem Schweißprozess zugeführt. Die elektrische Energie wurde damit großteils rückgewonnen, was die Verlustleistung deutlich reduziert. Der Nachteil dieser Lösung ist darin zu sehen, dass zum Rückspeisen der elektrischen Energie, der Schweißprozess laufen muss und der Schweißstromkreis dazu geschlossen sein muss. In einer Phase, in der kein Lichtbogen brennt (also der Schweißprozess unterbrochen ist), kann keine elektrische Energie in den Schweißprozess zugeführt werden. Ein weiterer Nachteil besteht darin, dass der Pufferkondensator nur über die überschüssige elektrische Energie aus dem Schweißstromkreis aufgeladen werden kann. Es dauert daher eine bestimmte Anzahl an Schweißzyklen, bis der Kondensator auf die benötigte Spannung geladen ist, bevor mit dem Rückspeisen der Energie begonnen werden kann. Das größere Problem eines solchen Pufferkondensators ist aber, dass der Pufferkondensator aus den oben genannten Gründen bei unterbrochenem Schweißstromkreis (z.B. Lichtbogenabriss) nicht entladen werden kann. Die darin gespeicherte elektrische Energie kann sich im Fehlerfall an der Schweißelektrode entladen. Das kann ein Sicherheitsproblem darstellen.

EP 2 969 358 B1 zeigt eine Schweißstromquelle mit einer Eingangsschaltung, einer Ausgangsschaltung und einer dazwischen liegenden Zwischenschaltung (in Form eines Kondensators). Die Ausgangsschaltung hat einen Ausgangswechselrichter mit einer Klemmschaltung, die die Spannung über den Wechselrichter begrenzt und die die überschüssige elektrische Energie aufnimmt und puffert. Die gepufferte überschüssige Energie wird an den Eingang des Wechselrichters zurückgeleitet. Auch bei dieser Lösung muss der Wechselrichter aktiv sein, also der Schweißprozess laufen und der Schweißstromkreis geschlossen sein, damit die überschüssige Energie vom Wechselrichter aufgenommen werden kann. Ebenso muss bei Verwendung von Klemmdioden der Pufferspeicher vorgeladen werden, was wiederum nur über den laufenden Schweißprozess möglich ist.

Bei diesen bekannten Lösungen kann es daher Situationen geben, in denen die in der Schweißleitung und/oder die in einem Pufferkondensator gespeicherte elektrische Energie nicht abgebaut werden kann, womit die Schweißstromquelle unter Umständen nicht in einen sicheren Zustand übergeführt werden kann.

Mit der erfindungsgemäßen Schweißstromquelle werden die Nachteile des Standes der Technik eliminiert, indem der zweite Anschluss des Stromrichters mit den elektrischen Eingangsleitungen der Schweißstromquelle verbunden ist. Die im Pufferkondensator gespeicherte elektrische Energie kann demnach mit dem Stromrichter in die Eingangsleitungen eingespeist werden. Auf diese Weise kann, die zumindest zeitweise überschüssige elektrische Energie im Schweißstromkreis in die Eingangsleitungen eingespeist werden und zwar unabhängig davon, ob der Schweißstromkreis geschlossen oder unterbrochen ist.

In einer vorteilhaften Ausgestaltung wird mit dem Stromrichter die elektrische Energie in einen parallel zum Schweißleistungsteileingang in den Eingangsleitungen geschalteten Zwischenkreiskondensator einspeist. Damit muss nur elektrische Energie aus einem Kondensator in einen anderen Kondensator umgeladen werden, was einfach realisiert werden kann. Wird der Zwischenkreiskondensator vom Stromrichter geladen, dann entnimmt der Zwischenkreiskondensator einfach weniger Energie aus der Spannungsquelle der Schweißstromquelle.

In einer vorteilhaften Ausgestaltung, mit einem bidirektionalen Stromrichter, wird mit dem Stromrichter elektrische Energie vom ersten Anschluss zum zweiten Anschluss übertragen. Das kann genutzt werden, um den Pufferkondensator auf eine vorgegebene Pufferspannung vorzuladen oder auch auf einer Pufferspannung geladen zu halten.

In einer weiteren vorteilhaften Ausgestaltung wird mit einem Hilfsstromrichter mit einem mit dem Pufferkondensator verbundenen Hilfsstromrichtereingang und einem mit den Ausgangsleitungen der Schweißstromquelle Hilfsstromrichterausgang eine vorgegebene Schweißspannung oder ein vorgegebener Schweißstrom am Ausgangsanschluss der Schweißstromquelle erzeugt. Das ermöglicht es, bei offenem Schweißstromkreis eine benötigte Schweißspannung bereitzustellen oder bei geschlossenem Schweißstromkreis einen vorgegebenen Schweißstrom bereitzustellen. Mit dem Hilfsstromrichter kann damit ein Schweißstrombereich abgedeckt oder eine Schweißspannung erzeugt werden, die mit dem Schweißleistungsteil nur ineffizient erzeugt werden könnten. Das erhöht den Wirkungsgrad der Schweißstromquelle.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 eine erfindungsgemäße Schweißstromquelle in einer möglichen Ausführung und in Verwendung zur Durchführung eines Schweißprozesses,
Fig.2 eine erfindungsgemäße Schweißstromquelle mit einem bidirektionalen Stromrichter und
Fig.3 eine erfindungsgemäße Schweißstromquelle mit einem Hilfsstromrichter.

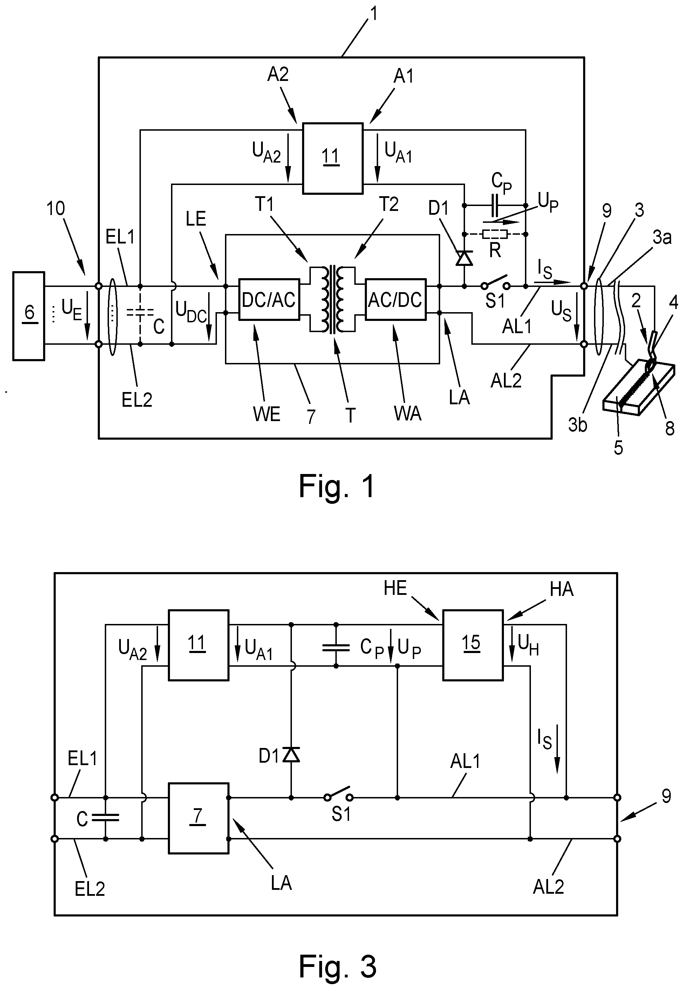

In der Ausführung nach Fig.1, ist die Schweißstromquelle 1 bei Verwendung über eine Schweißleitung 3 mit einem Schweißbrenner 2 verbunden. Der Schweißbrenner 2 hat eine Schweißelektrode 4 (in Fig.1 nur angedeutet). Die Schweißelektrode 4 kann eine abschmelzende Elektrode sein, wie beim MIG- oder MAG-Schweißen, oder eine nicht-abschmelzende Elektrode, wie beim WIG-Schweißen. Die Schweißleitung 3 umfasst eine Schweißstromleitung 3a (die von der Schweißstromquelle zum Schweißbrenner 2 bzw. zur Schweißelektrode 4 hinführende Leitung) und eine Rückleitung 3b (die vom zum schweißenden Werkstück 5 zur Schweißstromquelle 1 zurückführende Leitung). Zum Schweißen brennt zwischen der Schweißelektrode 4 und dem Werkstück 5 (bzw. dem Schmelzbad am Werkstück 5) zumindest zeitweise ein Lichtbogen 8 (Lichtbogenphase), womit der elektrische Schweißkreis geschlossen ist und ein Schweißstrom I_{S} über die Schweißleitung 3 fließt. Der Lichtbogen 8 wird zum Schweißen in bekannter Weise gezündet. Bei gewissen Schweißprozessen kann die Schweißelektrode 4 in einer sogenannten Kurzschlussphase das Werkstück 5 bzw. das Schmelzbad am Werkstück 5 unter Ausbildung eines elektrischen Kurzschlusses auch kontaktieren, wobei der Schweißkreis geschlossen bleibt.

Bei manchen Schweißverfahren wird der Schweißstelle zusätzlich ein Zusatzwerkstoff zugeführt, der im Lichtbogen 8 bzw. im Schmelzbad abgeschmolzen wird. Das kann mit einer bekannten Drahtvorschubeinheit (in Fig.1 nicht dargestellt), insbesondere beim MIG- oder MAG-Schweißen, oder händisch, insbesondere beim WIG-Schweißen, erfolgen. Im Falle einer abschmelzenden Schweißelektrode kann der Zusatzwerkstoff in bekannter Weise gleichzeitig die Schweißelektrode 4 ausbilden.

Die Schweißleitung 3 kann in bekannter Weise in einem sogenannten Schlauchpaket geführt sein. Im Schlauchpaket können noch weitere Leitungen vorgesehen sein, wie Steuerleitungen, Messleitungen, Leitungen zum Führen eines Kühlmediums (zum Kühlen des Schweißbrenners 2) oder eines Schutzgases. Ebenso kann im Schlauchpaket bedarfsweise auch ein Zusatzwerkstoff in Form eines Schweißdrahtes geführt sein.

Die Schweißstromquelle 1 hat einen Eingangsanschluss 10, an den bei Verwendung der Schweißstromquelle 1 eine elektrische Spannungsquelle 6 angeschlossen werden kann. Die Spannungsquelle 6 kann eine elektrische DC (Gleichspannung) oder eine AC (Wechselspannung) Spannungsquelle sein, die eine Versorgungsspannung U_{E} bereitstellt. Eine AC-Versorgungsspannung kann auch mehrphasig sein, insbesondere dreiphasig, womit am Eingang eine entsprechende Anzahl an Eingangsanschlusspolen vorgesehen sind (wie in Fig.1 durch die Punkte angedeutet). Die Schweißstromquelle 1 hat auch einen elektrischen Ausgangsanschluss 9, an den bei Verwendung der Schweißstromquelle 1 der Schweißbrenner 2 über die Schweißleitung 3 angeschlossen werden kann. An der Schweißstromquelle 1 ist in der Regel eine Anschlussbuchse als Ausgangsanschluss 9 vorgesehen, an die die Schweißleitung 3 angeschlossen werden kann. An der Schweißstromquelle 1 können noch weitere Anschlüsse vorgesehen sein, wie ein Anschluss für Schutzgas, ein Kühlmittelvorlauf- und ein Kühlmittelrücklaufanschluss, Steueranschlüsse usw.

In der Schweißstromquelle 1 ist ein Schweißleistungsteil 7 vorgesehen, das bei Verwendung der Schweißstromquelle 1 den für den durchzuführenden Schweißprozess erforderlichen Schweißstrom I_{S} und/oder die erforderliche Schweißspannung U_{S} erzeugt und über den Ausgangsanschluss 9 zur Verfügung stellt. Ein Schweißstrom I_{S} fließt nur bei geschlossenem Schweißkreis, wohingegen eine Schweißspannung U_{S} mitunter auch ohne geschlossenem Schweißkreis benötigt wird, beispielsweise für das Zünden eines Lichtbogens 8 oder für das Erzeugen einer Leerlaufspannung.

Das Schweißleistungsteil 7 ist eingangsseitig mit dem Eingangsanschluss 10 verbunden und ausgangsseitig mit dem Ausgangsanschluss 9. Im Falle einer AC-Spannungsquelle 6 ist in der Schweißstromquelle 1 eingangsseitig, also zwischen dem Schweißleistungsteil 7 und dem Eingangsanschluss 10 ein AC/DC-Wandler (Gleichrichter) vorgesehen. Abgesehen davon können eingangsseitig auch noch andere bekannte Eingangsschaltungen, wie ein Eingangsfilter, vorgesehen sein.

Das Schweißleistungsteil 7 hat einen Schweißleistungsteileingang LE, der mit dem Eingangsanschluss 10 verbunden ist (gegebenenfalls auch indirekt über einen Gleichrichter, Gleichspannungswandler und andere Eingangsschaltungen), und einen Schweißleistungsteilausgang LA, der mit dem Ausgangsanschluss 9 verbunden ist.

Der Schweißleistungsteileingang LE ist über elektrische Eingangsleitungen EL1, EL2 (zumindest zwei Leitungen) mit dem Eingangsanschluss 10 verbunden. Die Anzahl der Eingangsleitungen EL1, EL2 ist abhängig davon, ob es sich um eine (ein- oder mehrphasige) AC- oder DC-Spannung handelt. Der Schweißleistungsteilausgang LA ist über elektrische Ausgangsleitungen AL1, AL2 (zumindest zwei Leitungen) mit dem Ausgangsanschluss 9 verbunden, wobei jede elektrische Leitung jeweils einen elektrischen Ausgangspol bildet. Zum Schweißen wird üblicherweise ein Ausgangspol benötigt, über den der Schweißstrom I_{S} geführt ist und ein weiterer Ausgangspol zum Bereitstellen eines Referenzpotentials, in der Regel Masse.

Das Schweißleistungsteil 7 ist ein Stromrichter, der die Spannung am Schweißleistungsteileingang LE in eine Spannung am Schweißleistungsteilausgang LA wandelt. Am Schweißleistungsteileingang LE liegt dabei immer eine Gleichspannung U_{DC} an. Das Schweißleistungsteil 7 kann somit als Gleichspannungswandler (DC/DC-Wandler) oder als Wechselrichter (DC/AC-Wandler) arbeiten (bedarfsweise auch umschaltbar), was auch abhängig vom mit der Schweißstromquelle 1 durchzuführenden Schweißverfahren ist. Die Schaltungstopologie des Schweißleistungsteils 7 ist dabei sekundär.

Das Schweißleistungsteil 7 hat aber in der Regel zumindest einen Eingangswandler WE und zumindest einen Ausgangswandler WA und einen dazwischen angeordneten Schweißtransformator T, wie in der Ausführung nach Fig.1 gezeigt. Der Schweißtransformator T dient der galvanischen Trennung des Eingangs vom Ausgang, aber auch der Spannungserhöhung oder Spannungssenkung (abhängig vom Wicklungsverhältnis). "Dazwischen angeordnet" bedeutet dabei, dass der Ausgang des Eingangswandlers WE mit der Primärwicklung T1 des Schweißtransformators T verbunden ist und der Eingang des Ausgangswandlers WA mit der zumindest einen Sekundärwicklung T2 des Schweißtransformators T.

Im Falle mehrerer Eingangswandler WE sind diese in Serie geschaltet, d.h., dass der Ausgang eines Eingangswandlers jeweils der Eingang des nachfolgenden Eingangswandlers ist. Denkbar wäre beispielsweise eine Kombination eines Gleichspannungswandlers (z.B. ein Aufwärtswandler) mit einem Wechselrichter, der mit der Primärwicklung T1 verbunden ist. Im Falle mehrerer Ausgangswandler WA sind diese in Serie geschaltet, d.h., dass der Ausgang eines Ausgangswandlers jeweils der Eingang des nachfolgenden Ausgangswandlers ist. Eine häufig anzutreffende ausgangsseitige Anordnung umfasst einen mit der Sekundärwicklung T2 verbundenen Gleichrichter gefolgt von einem Wechselrichter, um eine AC-Schweißspannung U_{S} zu erzeugen.

In der Ausführung nach Fig.1 ist ein Eingangswandler WE in Form eines Wechselrichters (DC/AC-Wandler) und ein Ausgangswandler WA in Form eines Gleichrichters (AC/DC-Wandler) vorgesehen mit einem dazwischen angeordneten Schweißtransformator T.

Üblicherweise ist parallel zum Schweißleistungsteileingang LE ein Zwischenkreiskondensator C geschaltet (wie in Fig.1 gestrichelt angedeutet). Die Gleichspannung U_{DC} am Schweißleistungsteileingang LE liegt damit auch am Zwischenkreiskondensator C an.

Wie eingangs bereits ausgeführt, bildet die Schweißleitung 3 eine Induktivität, in der beim Schweißen mit der Schweißstromquelle 1 elektrische Energie gespeichert wird. Um diese elektrische Energie, auch möglichst rasch, abbauen zu können, war bisher schon vorgesehen, über einen Schalter S1 die Schweißleitung 3, beispielsweise die Schweißstromleitung 3a, zu öffnen, sodass der in der Schweißleitung 3 fließende Strom über einen Widerstand R fließt (in Fig.1 gestrichelt angedeutet), wo der elektrische Strom in Wärme umgewandelt wurde. Eine Diode D1 vorgesehen, um die gewünschte Stromflussrichtung vorzugeben. Dieser Schalter S1 kann als Halbleiterschalter, wie in Form eines Transistors, ausgeführt sein. In Abhängigkeit vom durchzuführenden Schweißprozess kann es erforderlich sein, den Schalter S1 mit einer Frequenz bis in den 100 Hz Bereich zu schalten. In manchen Ausführungen war auch ein Pufferkondensator C_{P} parallel zum Widerstand R vorgesehen. Damit konnte die elektrische Energie bisher bei offenem Schalter S1 zumindest teilweise im Pufferkondensator C_{P} zwischengespeichert werden und über den Widerstand R abgebaut werden. Hierfür konnte auch ein Schalter vorgesehen sein, um den Widerstand R zumindest zeitweise mit dem Pufferkondensator Cp zu verbinden. Die Nachteile dieses Vorgehens wurden eingangs bereits ausgeführt.

Die gegenständliche Erfindung baut auf dieser bekannten Schaltung auf, wobei erfindungsgemäß kein Widerstand R mehr benötigt wird.

In der erfindungsgemäßen Schweißstromquelle 1 ist der Schweißleistungsteilausgang LA des Schweißleistungsteils 7 ausgangsseitig über elektrische Ausgangsleitungen AL1, AL2 mit dem Ausgangsanschluss 9 verbunden. In zumindest einer der elektrischen Leitungen AL1, AL2 ist ein Schalter S1, vorzugsweise ein Halbleiterschalter (z.B. ein Transistor), vorgesehen. Es wäre grundsätzlich auch denkbar, dass in beiden Ausgangsleitungen AL1, AL2 ein Schalter S1 vorgesehen ist. Der Schalter S1 ist eingerichtet, die jeweilige Ausgangsleitungen AL1, AL2 zu öffnen oder zu schließen.

In der Schweißstromquelle 1 ist erfindungsgemäß ferner ein Stromrichter 11 vorgesehen (Fig.1), mit einem ersten Anschluss A1 und einem zweiten Anschluss A2. Der Stromrichter 11 ist in einem ersten Betriebsmode der Schweißstromquelle 1 vorgesehen, eine Gleichspannung U_{A1} am ersten Anschluss A1 in eine elektrische Spannung U_{A2} am zweiten Anschluss A2 zu wandeln, also elektrische Energie vom ersten Anschluss A1 auf den zweiten Anschluss A2 zu übertragen. Ob die zweite Spannung U_{A2} eine DC- oder eine AC-Spannung ist, hängt davon ab, wo die elektrische Energie hin übertragen wird, wie weiter unten noch näher ausgeführt wird. Das bestimmt auch, ob der der Stromrichter 11 ein Gleichspannungswandler (DC/DC-Wandler), Wechselrichter (DC/AC-Wandler) oder erforderlichenfalls ein anderer Wandler ist. Die Schaltungstopologie des Gleichspannungswandlers 11 ist hierbei nebensächlich.

Für diesen ersten Betriebsmode reicht ein unidrektionaler Stromrichter 11 aus, der elektrische Energie nur vom ersten Anschluss A1 zum zweiten Anschluss A2 übertragen kann.

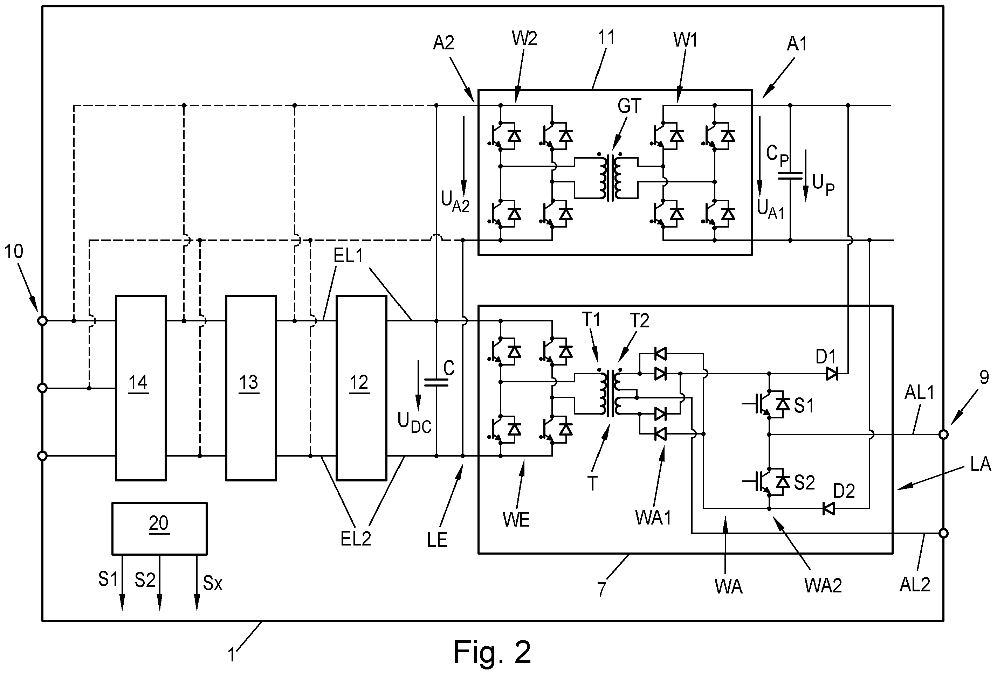

Der ersten Anschluss A1 ist mit dem Pufferkondensator Cp verbunden. Vorzugsweise ist der erste Anschluss A1 parallel zum Pufferkondensator C_{P} geschaltet, d.h., dass die Gleichspannung U_{A}, am ersten Anschluss A1 auch am Pufferkondensator C_{P} anliegt. Der zweite Anschluss A2 ist mit den Eingangsleitungen EL1, EL2 verbunden. Vorzugsweise ist der zweite Anschluss A2 parallel zum Schweißleistungsteileingang LE geschaltet, womit die zweite Spannung U_{A2} eine DC-Spannung ist. In diesem Fall wäre der Stromrichter 11 ein Gleichspannungswandler. Im Falle eines Zwischenkreiskondensators C vor dem Schweißleistungsteileingang LE ist der zweite Anschluss A2 vorzugsweise parallel zum Zwischenkreiskondensator C und somit auch parallel zum Schweißleistungsteileingang LE geschaltet (wie in Fig.1). Der zweite Anschluss A2 kann aber auch mit jeder anderen Stelle der Eingangsleitungen EL1, EL2 verbunden sein (siehe Fig.2). In diesem Fall kann die zweite Spannung U_{A2} eine DC- oder eine AC-Spannung sein und der Stromrichter 11 ein Gleichspannungswandler oder auch ein Wechselrichter sein.

Während des Schweißens wird zu den benötigten Zeitpunkten (z.B. in Abhängigkeit des Schweißprozesses) der Schalter S1 geöffnet. Damit wird der Schweißstrom I_{S} über den Pufferkondensator Cp umgeleitet und der Pufferkondensator Cp wird aufgeladen. Zu diesem Zeitpunkt überschüssige elektrische Energie im Schweißstromkreis wird damit aus dem Schweißstromkreis im Pufferkondensator C_{P} gespeichert. Die im Pufferkondensator C_{P} gespeicherte elektrische Energie kann über den Stromrichter 11 zu den Eingangsleitungen EL1, EL2, und somit an den Eingang des Schweißleistungsteils 7, übertragen werden. Damit kann die im Pufferkondensator C_{P} gespeicherte Energie beispielsweise in einen Zwischenkreiskondensator C geladen werden und für den Schweißprozess wiederverwendet werden. Die im Pufferkondensator C_{P} gespeicherte Energie kann aber auch in die Spannungsquelle 6 rückgespeist werden und kann damit ebenfalls wiederverwendet werden. Wenn die Spannungsquelle 6 beispielsweise ein AC- oder DC-Stromnetz ist, kann die Energie in das Stromnetz rückgespeist werden. Das erhöht den Wirkungsgrad der Schweißstromquelle 1 signifikant, gegenüber dem Abbau der elektrischen Energie an einem Widerstand R.

Der Vorteil des Rückspeisens der elektrischen Energie aus dem Pufferkondensator C_{P} in die Eingangsleitungen EL1, EL2 vor dem Schweißleistungsteileingang LE des Schweißleistungsteils 7 liegt darin, dass das auch dann möglich ist, wenn der Schweißstromkreis unterbrochen ist, beispielsweise wenn der Lichtbogen abreißt oder das Schweißen beendet wurde. Auch bei unterbrochenem Schweißstromkreis kann die elektrische Energie über den Stromrichter 11 aus dem Pufferkondensator Cp in den Zwischenkreiskondensator C geladen werden oder in die Spannungsquelle 6 rückgespeist werden, oder auch beides.

Bei den aus dem Stand der Technik bekannten Methoden ist das nicht möglich. In der WO 2022/185161 A1 wird beispielsweise die im Pufferkondensator C_{P} gespeicherte Energie nach dem Schweißleistungsteilausgang LA rückgespeist, was aber nur dann möglich ist, wenn der Schweißstromkreis geschlossen ist. In der EP 2 969 358 B1 wird beispielsweise vor dem Ausgangswandler WA im Schweißleistungsteil 7 rückgespeist. Auch das ist nur dann möglich, wenn der Schweißstromkreis geschlossen ist. Wäre der Schweißstromkreis unterbrochen, gäbe es keinen Stromfluss in der Schweißleitung 3, was ein Rückspeisen bei diesen Methoden verunmöglicht.

In einer vorteilhaften Ausgestaltung ist der Stromrichter 11 ein bidirektionaler Stromrichter, der elektrische Energie in beide Richtungen übertragen kann, also vom ersten Anschluss A1 zum zweiten Anschluss A2, aber auch umgekehrt vom zweiten Anschluss A2 zum ersten Anschluss A1. Die Schaltungstopologie eines solchen bidirektionalen Stromrichters ist wieder unerheblich und es sind verschiedenste Ausführungen bekannt.

Damit elektrische Energie aus dem Pufferkondensator Cp über den Stromrichter 11 in die Eingangsleitungen EL1, EL2 vor den Schweißleistungsteileingang LE rückgespeist werden kann, ist es in der Regel notwendig, dass die Pufferspannung U_{P} am Pufferkondensator C_{P} einen bestimmten Minimalwert überschreitet (in Abhängigkeit von der Ausführung des Stromrichters 11). Der Pufferkondensator C_{P} wird aber immer nur während der relativ kurzen Offenzeiten des Schalters S1 geladen. Damit dauert es zu Beginn des Schweißens eine gewisse Zeit, bis der Pufferkondensator C_{P} hinreichend geladen ist und bis die Energierückgewinnung beginnen kann.

Wenn der Stromrichter 11 ein bidirektionaler Stromrichter ist, dann kann der Pufferkondensator C_{P} in einem zweiten Betriebsmode der Schweißstromquelle 1 zu Beginn des Schweißens über den Gleichspannungswandler 11 aus den Eingangsleitungen EL1, EL2 der Schweißstromquelle 1 vorgeladen werden. Der Pufferkondensator C_{P} ist damit praktisch unmittelbar auf die benötigte Pufferspannung U_{P} vorgeladen und die Energierückgewinnung kann praktisch unmittelbar beginnen. Zum Vorladen des Pufferkondensators C_{P} ist der Stromrichter 11 ein, oder arbeitet der Stromrichter als ein, Gleichspannungswandler oder Gleichrichter.

Fig.2 zeigt eine weitere vorteilhafte Ausgestaltung einer erfindungsgemäßen Schweißstromquelle 1. In diesem Fall ist im Schweißleistungsteil 7 ausgangsseitig ein erster Ausgangswandler WA1 in Form eines Gleichrichters vorgesehen. Der Eingang dieses Gleichrichters ist mit der Sekundärwicklung T2 des Schweißtransformators T verbunden. Der Ausgang dieses Gleichrichters ist mit dem Eingang eines zweiten Ausgangswandlers WA2 in Form eines Wechselrichters verbunden. Der Ausgang dieses Wechselrichters ist wiederum mit dem Schweißleistungsteilausgang LA und folglich über die Ausgangsleitungen AL1, AL2 auch mit dem Ausgangsanschluss 9 verbunden. Die Anzahl der Ausgangswandler WA1, WA2 bilden zusammen den Ausgangswandler WA des Schweißleistungsteils 7.

Im Ausführungsbeispiel der Fig.2 sind am Schweißtransformator T zwei Sekundärwicklungen T2 vorgesehen, was aber auch mit einer Sekundärwicklung T2 mit Mittelpunktanzapfung realisiert werden könnte. Damit kann der erste Ausgangswandler WA1 in Form eines Gleichrichters eine positive und eine negative DC-Spannung erzeugen, die an separaten Ausgängen des Gleichrichters zur Verfügung stehen. Der Mittelpunkt der Sekundärwicklungen wird als Referenzspannungsausgang an den Ausgangsanschluss 9 geschaltet. Es ist aber auch jede andere Gleichrichtertopologie ebenso anwendbar.

Der zweite Ausgangswandlers WA2 in Form eines Wechselrichters ist in Form einer Serienschaltung zweier Schalter S1, S2, hier zweier Halbleiterschalter (hier Transistoren), ausgeführt, wobei der Mittelpol zwischen den beiden Schalter S1, S2 über die erste Ausgangsleitung AL1 an den Ausgangsanschluss 9 geführt ist. Der jeweils zweite Anschlusspol der Schalter S1, S2 ist jeweils mit einem Ausgang des ersten Ausgangswandlers WA1 in Form eines Gleichrichters verbunden, also mit einem positiven oder negativen DC-Spannungsausgang des Gleichrichters. Damit kann durch Umschalten der Schalter S1, S2 entweder die positive oder die negative DC-Ausgangsspannung des Gleichrichters (erster Ausgangswandler WA1) an den Ausgangsanschluss 9 geschaltet werden. Am Ausgangsanschluss 9 liegt damit eine positive oder negative Spannung (bezogen auf eine Referenzspannung) an. Werden die Schalter S1, S2 entsprechend angesteuert, beispielsweise von einer Steuereinheit 20 (in Fig.2 nur angedeutet) der Schweißstromquelle 1, wird am Ausgangsanschluss 9 folglich eine Wechselspannung erzeugt.

Der zweite Ausgangswandler WA2 in Form eines Wechselrichters ist damit in Form eines einfachen Umschalters ausgeführt, was möglich ist, wenn der Gleichrichter (erster Ausgangswandler WA1) eine positive und eine negative DC-Ausgangsspannung liefert.

Der Wechselrichter (zweiter Ausgangswandler WA2) kann aber natürlich auch mit jeder anderen Wechselrichtertopologie realisiert werden insbesondere in Kombination mit einer anderen Gleichrichterschaltung (erster Ausgangswandler WA1), beispielsweise mit einer bekannten Halbbrücken- oder Vollbrückenschaltung von Halbleiterschaltern (wie z.B. Transistoren).

Der Eingangswandler WE in Form eines Wechselrichters ist im Ausführungsbeispiel der Fig.2 als hinlänglich bekannte Vollbrückenschaltung von Halbleiterschaltern (wie z.B. Transistoren) ausgeführt. Der Wechselrichter (Eingangswandler WE) kann aber natürlich auch mit jeder anderen Wechselrichtertopologie realisiert werden.

Der Vorteil des Umschalters als zweiter Ausgangswandler WA2 in Fig.2 liegt zum einen an der einfachen Ausführung. Zum anderen ist der Vorteil aber insbesondere auch darin zu sehen, dass die Schalter S1, S2 des zweiten Ausgangswandlers WA2 gleichzeitig auch für die Energierückgewinnung verwendet werden können. Die Schalter S1, S2 sind damit Schalter mit denen eine Ausgangsleitung AL1, AL2 geöffnet oder geschlossen werden kann.

Zum Umpolen zum Bereitstellen einer Wechselspannung zum Schweißen werden die Schalter S1, S2 abwechselnd geöffnet und geschlossen. Werden beide Schalter S1, S2 für eine gewisse Zeitspanne gleichzeitig geöffnet, wird die in der Schweißleitung gespeicherte elektrische Energie in den Pufferkondensator C_{P} geladen und dort zwischengespeichert. Die im Pufferkondensator C_{P} gespeicherte Energie kann dann wie oben erläutert über den Stromrichter 11 in die Eingangsleitungen EL1, EL2 vor den Schweißleistungsteileingang LE des Schweißleistungsteils 7 rückgespeist werden.

In der Ausgestaltung der Schweißstromquelle 1 nach Fig.2 sind zudem noch optional eingangsseitig ein Eingangsfilter 14, ein Eingangsgleichrichter 13 und ein Eingangsgleichspannungswandler 12 (vorzugsweise ein Aufwärtswandler) vorgesehen. Eine solche Ausführung ist beispielsweise bei einer Spannungsquelle 6 in Form eines AC-Versorgungsnetzes, wie ein dreiphasiges 400V Versorgungsnetz, vorteilhaft.

Mit einem Aufwärtswandler als Eingangsgleichspannungswandler 12 kann am Zwischenkreiskondensator C beispielsweise eine Gleichspannung U_{DC} von 800V bis 900 V DC eingestellt werden, die dann vom Schweißleistungsteil 7 auf die benötige Schweißspannung U_{S} gewandelt wird. Der Pufferkondensator Cp kann für eine Pufferspannung Up von 400V DC ausgelegt sein. Der Stromrichter 11 arbeitet damit in einer Richtung als Aufwärtswandler und in die andere Richtung als Abwärtswandler.

In Fig.2 ist zudem gestrichelt angedeutet, dass der zweite Anschluss A2 des Stromrichters 11 an verschiedenen Stellen mit den Eingangsleitungen EL1, EL2 verbunden sein kann, insbesondere vor einem Eingangsfilter 14, vor einem Eingangsgleichrichter 13 und einem Eingangsgleichspannungswandler 12. In allen Fällen kann die elektrische Energie aus dem Pufferkondensator C_{P} unabhängig von einem Schweißstromkreis an den Eingang des Schweißleistungsteils 7 rückgespeist werden. Im Falle einer Rückspeisung vor einem Eingangsgleichrichter 13 oder ein Eingangsgleichspannungswandler 12 wäre die zweite Spannung U_{A2} eine DC-Spannung und der Stromrichter 11 ein Gleichspannungswandler. Im Falle einer Rückspeisung vor einem Eingangsfilter 14 wäre die zweite Spannung U_{A2} eine AC-Spannung, wenn die vorgesehene Spannungsversorgung eine AC-Spannungsversorgung ist, und der Stromrichter 11 ein Wechselrichter. Ist die Spannungsversorgung eine DC-Spannungsversorgung, dann wäre die zweite Spannung U_{A2} auch in diesem Fall eine DC-Spannung und der Stromrichter 11 ein Gleichspannungswandler.

Fig.2 zeigt weiters eine vorteilhafte Ausführung des Stromrichters 11 in Form eines bidirektionalen Wandlers. Diese Ausführungsform kann in jeder der beschriebenen Ausgestaltungen verwendet werden.

Der Stromrichter 11 umfasst in dieser Ausgestaltung einen ersten Stromrichter W1 und einen zweiten Stromrichter W2. Zwischen dem ersten Stromrichter W1 und dem zweiten Stromrichter W2 kann optional ein Transformator GT geschaltet sein. Der Transformator GT dient vorteilhaft der galvanischen Trennung von Eingang und Ausgang der Schweißstromquelle 1. Der erste Stromrichter W1 und der zweite Stromrichter W2 sind in der gezeigten Ausführung jeweils als Vollbrückenschaltung mit Halbleiterschaltern (z.B. Transistoren) ausgeführt, wobei für die Stromrichter W1, W2 auch jede andere Stromrichtertopologie möglich ist. Mit einer Vollbrückenschaltung kann am ersten und zweiten Stromrichter W1, W2 jeweils eine AC- oder eine DC-Spannung (erste und zweite Spannung U_{A1}, U_{A2}) anliegen. Durch entsprechende Ansteuerung der Halbleiterschalter der Vollbrückenschaltung kann der Stromrichter 11 dann je nach Energieflussrichtung als Umrichter, Wechselrichter oder Gleichrichter arbeiten.

Mit dieser Ausgestaltung des Stromrichters 11 kann elektrische Energie vom ersten Anschluss A1 zum zweiten Anschluss A2 übertragen werden. Hierfür wird die Gleichspannung U_{A}, am ersten Anschluss A1 zuerst vom ersten Stromrichter W1 in eine Wechselspannung gewandelt und optional vom Transformator GT übertragen. Diese Wechselspannung wird dann vom zweiten Stromrichter W2 in eine DC zweite Spannung U_{A2} oder in eine AC zweite Spannung U_{A2} gewandelt. Für die Übertragung von elektrischer Energie vom zweiten Anschluss A2 zum ersten Anschluss A1 erfolgt das entsprechend umgekehrt.

In Fig.3 ist eine weitere vorteilhafte Ausgestaltung einer erfindungsgemäßen Schweißstromquelle 1 dargestellt. Darin wird die Schweißstromquelle 1 durch einen Hilfsstromrichter 15 ergänzt. Die anderen Schaltungsteile und deren Ausführungen, und auch mögliche zusätzliche nicht dargestellte Schaltungskomponenten, entsprechen den obigen Ausführungen.

Der Hilfsstromrichter 15 ist mit einem Hilfsstromrichtereingang HE mit dem Pufferkondensator C_{P} verbunden, vorzugsweise parallel zum Pufferkondensator C_{P} geschaltet (wie vorzugsweise auch der Stromrichter 11). Ein Hilfsstromrichterausgang HA ist mit den Ausgangsleitungen AL1, AL2 verbunden, vorzugsweise zwischen dem Schalter S1 und dem Ausgangsanschluss 9.

Der Hilfsstromrichter 15 ist entweder ein (oder arbeitet als ein) Gleichspannungswandler, der die DC Pufferspannung U_{P} am Pufferkondensator C_{P} am Hilfsstromrichtereingang HE in eine DC-Hilfsspannung U_{H} am Hilfsstromrichterausgang HA wandelt (z.B. für eine Ausführung wie in Fig.1), oder der aus der DC Pufferspannung Up am Pufferkondensator Cp am Hilfsstromrichtereingang HE eine DC-Hilfsspannung U_{H} unterschiedlicher Polarität am Hilfsstromrichterausgang HA erzeugt (z.B. für eine Ausführung wie in Fig.2). In einer möglichen Ausführung der Fig.3 ist der Hilfsstromrichter 15 als Vollbrückenschaltung mit Halbleiterschalter (z.B. Transistoren) ausgeführt (wie z.B. der Eingangswandler WE oder die Stromrichter W1, W2 in Fig.2), was beides ermöglicht.

Der Hilfsstromrichter 15 ermöglicht einen dritten Betriebsmode und einen vierten Betriebsmode der Schweißstromquelle 1. Hierfür ist es vorteilhaft, wenn der Stromrichter 11 als bidirektionaler Wandler ausgeführt ist (wie beispielsweise in Fig.2 gezeigt).

Das Schweißleistungsteil 7 ist grundsätzlich für die Bereitstellung der Schweißspannung U_{S} und des Schweißstromes I_{S} am Ausgangsanschluss 9 der Schweißstromquelle 1 zuständig. Nachdem die Schweißstromquelle 1 für eine Fülle von unterschiedlichen Schweißprozessen eingesetzt werden soll, muss das Schweißleistungsteil 7 einen großen Strombereich abdecken können. Aufgrund von möglichen Beschränkungen der Schaltfrequenzen der Ansteuerung der Halbleiterschalter im Schweißleistungsteil 7 können kleine Stromwerte, beispielsweise unter 20A, mitunter durch die Steuereinheit 20 nicht optimal ausgeregelt und mit dem Schweißleistungsteil 7 eingestellt werden. Aber insbesondere im niedrigen Schweißstrombereich, beispielsweise unter 20A, ist die Gefahr eines unerwünschten Lichtbogenabrisses, der beim Schweißen auf jeden Fall vermieden werden sollte, hoch. Schon geringe Schwankungen des Schweißstromes I_{S} können bei niedrigen Schweißströmen somit schon zu unerwünschten Lichtbogenabrissen während des Schweißens führen.

Der Hilfsstromrichter 15 kann nun in einem dritten Betriebsmode der Schweißstromquelle 1 eingesetzt werden, um solche niedrigen Schweißstrombereiche abzudecken. Damit kann der niedrige Schweißstrombereich, insbesondere Schweißströme unterhalb von 20A, direkt über den Hilfsstromrichter 15 eingestellt und am Ausgangsanschluss 9 bereitgestellt werden. Dieser Schweißstrom wird somit nicht über das Schweißleistungsteil 7 übertragen, sondern direkt vom Hilfsstromrichter 15 erzeugt und in den Ausgangsanschluss 9 eingespeist.

Hierfür wird der Pufferkondensator C_{P} über den Stromrichter 11 aus den Eingangsleitungen EL1, EL2 der Schweißstromquelle 1 auf eine Pufferspannung U_{P} geladen. Der Pufferkondensator C_{P} versorgt dann den Hilfsstromrichter 15, der daraus den benötigten Schweißstrom I_{S} erzeugt und in den Ausgangsanschluss 9 einspeist. Das Schweißleistungsteil 7 muss dabei nicht laufen.

Dabei ist es besonders vorteilhaft, wenn die Pufferspannung U_{P} auf unter 113V DC geregelt wird. Aufgrund von Sicherheitsanforderungen (insbesondere einschlägige Normen) darf an der Schweißelektrode 4 pro Sekunde niemals mehr als 4 Joule Energie anliegen. Das muss bei Schweißstromquellen 1 immer berücksichtigt werden, beispielsweise von der Steuereinheit 20. Allerdings entfällt diese Vorgabe bei Spannungen unterhalb von 113V DC. Folglich kann das Einspeisen von niedrigen Schweißströmen I_{S} bei einer Pufferspannung U_{P} kleiner 113V DC hinsichtlich solcher Sicherheitsbeschränkungen unbeachtlich bleiben. Bei höheren Pufferspannungen U_{P} müsste man das Einspeisen niedriger Schweißströme I_{S} in der Sicherheits-Energiebetrachtung miteinbeziehen.

Bei höheren Schweißströmen I_{S}, beispielsweise bei Schweißströmen I_{S} größer 20A, kann der Hilfsstromrichter 15 deaktiviert sein oder bedarfsweise auch gemeinsam mit dem Schweißleistungsteil 7 laufen. Im letzten Fall würde der Hilfsstromrichter 15 immer einen gewissen Anteil des Schweißstromes I_{S} liefern und das Schweißleistungsteil 7 den Rest.

Bei Verwendung heutiger Schweißstromquellen 1 gibt es immer mehr Betriebszustände, in denen nur eine Schweißspannung U_{S} am Ausgangsanschluss 9 benötigt wird, aber kein Schweißstrom I_{S}, beispielsweise beim Teachen eines Schweißroboters oder beim Schweißelektroden-Leerlauf (z.B. als Zündspannung). Ein Schweißleistungsteil 7 einer Schweißstromquelle 1 läuft in einem solchen Betriebszustand in der Regel sehr ineffizient und verursacht hohe Verluste.

Daher kann vorgesehen sein, dass in einem vierten Betriebsmode der Schweißstromquelle 1 der Hilfsstromrichter 15 eine Schweißspannung U_{S} in den Ausgangsanschluss 9 einspeist, ohne dass ein Schweißstrom I_{S} fließt, beispielsweise weil keine elektrische Last an den Ausgangsanschluss 9 angeschlossen ist. Der Hilfsstromrichter 15 kann das wesentlich effizienter erledigen als das Schweißleistungsteil 7, das für einen sehr großen Spannungs- und Strombereich ausgelegt sein muss.

Der Hilfsstromrichter 15 wird hierzu über den Pufferkondensator Cp versorgt, der wiederum über den Stromrichter 11 und die Eingangsleitungen EL1, EL2 geladen werden kann.

Auch im vierten Betriebsmode ist es aus denselben Gründen wie oben erläutert vorteilhaft (aber nicht notwendig), wenn die Pufferspannung U_{P} auf unter 113V DC gehalten wird.

Die Steuereinheit 20 der Schweißstromquelle 1 ist bei Verwendung der Schweißstromquelle 1 für Ansteuerung sämtlicher Schalter S1, S2 und Halbleiterschalter Sx (beispielsweise in den diversen Stromrichtern) zuständig (wie in Fig.2 angedeutet), um den jeweiligen Schweißprozess zu realisieren. Die Steuereinheit 20 ist vorzugsweise eine mikroprozessorbasierte Hardware mit entsprechender, darauf laufender Steuersoftware oder eine integrierte Schaltung oder auch eine Mischung daraus.

In den obigen Ausführungen wird mehrmals ein Einspeisen oder Rückspeisen einer elektrischen Spannung, eines elektrischen Stromes oder elektrischer Energie erwähnt. Obwohl an sich für eine Fachperson auf dem Gebiet der Leistungselektronik selbstverständlich, sei angemerkt, dass das vorzugsweise durch eine entsprechende Steuerung der Spannungen der verschiedenen Wandler realisiert wird. Das kann von der Steuereinheit 20 durch Ansteuern der jeweiligen Halbleiterschalter gemacht werden, die dafür elektrische Spannungen auch an verschiedenen Stellen in der Schweißstromquelle 1 erfassen kann, beispielsweise mittels Spannungssensoren. Wenn der Stromrichter 11 beispielsweise elektrische Energie vom zweiten Anschluss A2 in die Eingangsleitungen EL1, EL2 rückspeist, dann erfolgt das vorteilhaft dadurch, dass die zweite Spannung U_{A2} am zweiten Anschluss S2 etwas höher eingestellt wird, als die vorliegende Spannung am Einspeisepunkt. Damit kann der gewünschte Stromfluss realisiert werden. Gleiches gilt in analoger Weise für das Bereitstellen eines Schweißstromes I_{S} oder einer Schweißspannung U_{S} durch den Hilfsstromrichter 15.

## Patentansprüche

1. Schweißstromquelle mit einem Eingangsanschluss (10) und einem Ausgangsanschluss (9), wobei bei Verwendung der Schweißstromquelle (1) an den Eingangsanschluss (10) eine Spannungsquelle (6) und an den Ausgangsanschluss (9) über eine Schweißleitung (3) ein Schweißbrenner (4) anschließbar ist, wobei in der Schweißstromquelle (1) ein Schweißleistungsteil (7) vorgesehen ist, wobei ein Schweißleistungsteileingang (LE) des Schweißleistungsteils (7) eingangsseitig über elektrische Eingangsleitungen (EL1, EL2) mit dem Eingangsanschluss (10) der Schweißstromquelle (1) verbunden ist und ein Schweißleistungsteilausgang (LA) des Schweißleistungsteils (7) ausgangsseitig über elektrische Ausgangsleitungen (AL1, AL2) mit dem Ausgangsanschluss (9) der Schweißstromquelle (1) verbunden ist, wobei in zumindest einer der elektrischen Ausgangsleitungen (AL1, AL2) ein Schalter (S1, S2) vorgesehen ist, wobei parallel zum Schalter (S1, S2) ein Pufferkondensator (C_{P}) geschaltet ist, wobei in der Schweißstromquelle (1) ein Stromrichter (11) vorgesehen ist, der eingerichtet ist, elektrische Energie von einem ersten Anschluss (A1) des Stromrichters (11) zu einem zweiten Anschluss (A2) des Stromrichters (11) zu übertragen und der erste Anschluss (A1) des Stromrichters (11) mit dem Pufferkondensator (C_{P}) verbunden ist, **dadurch gekennzeichnet, dass** der zweite Anschluss (A2) des Stromrichters (11) mit den elektrischen Eingangsleitungen (EL1, EL2) der Schweißstromquelle (1) verbunden ist.

2. Schweißstromquelle nach Anspruch 1, **dadurch gekennzeichnet, dass** parallel zum Schweißleistungsteileingang (LE) ein Zwischenkreiskondensator (C) in den Eingangsleitungen (EL1, EL2) geschaltet ist.

3. Schweißstromquelle nach Anspruch 2, **dadurch gekennzeichnet, dass** der zweite Anschluss (A2) parallel zum Zwischenkreiskondensator (C) geschaltet ist.

4. Schweißstromquelle nach einem der Ansprüche 1 bis 3, **dadurch gekennzeichnet, dass** der erste Anschluss (A1) des Stromrichters (11) parallel zum Pufferkondensator (Cp) geschaltet ist.

5. Schweißstromquelle nach einem der Ansprüche 1 bis 4, **dadurch gekennzeichnet, dass** das Schweißleistungsteil (7) eine Anzahl von Eingangswandlern (WE) und eine Anzahl von Ausgangswandlern (WA, WA1, WA2) umfasst und zwischen der Anzahl von Eingangswandlern (WE) und der Anzahl von Ausgangswandlern (WA, WA1, WA2) ein Schweißtransformator (T) mit zumindest einer Primärwicklung (T1) und zumindest einer Sekundärwicklung (T2) geschaltet ist **und dass** die Anzahl von Eingangswandlern (WE) mit zumindest einer Primärwicklung (T1) verbunden ist und die Anzahl von Ausgangswandlern (WA, WA1, WA2) mit zumindest einer Sekundärwicklung (T2) verbunden ist.

6. Schweißstromquelle nach Anspruch 5, **dadurch gekennzeichnet, dass** ein Eingang eines Gleichrichters als erster Ausgangswandler (WA1) mit zumindest einer Sekundärwicklung (T2) verbunden ist, ein Ausgang des Gleichrichters mit einem Eingang eines Wechselrichters als zweiter Ausgangswandler (WA2) verbunden ist und ein Ausgang des Wechselrichters mit dem Schweißleistungsteilausgang (LA) verbunden ist.

7. Schweißstromquelle nach einem der Ansprüche 1 bis 6, **dadurch gekennzeichnet, dass** der Stromrichter (11) als bidirektionaler Stromrichter ausgeführt ist und eingerichtet ist, entweder elektrische Energie vom ersten Anschluss (A1) zum zweiten Anschluss (A2) zu übertragen oder vom zweiten Anschluss (A2) zum ersten Anschluss (A1) zu übertragen.

8. Schweißstromquelle nach Anspruch 7, **dadurch gekennzeichnet, dass** der bidirektionale Stromrichter (11) einen ersten, mit dem ersten Anschluss (A1) verbundenen Stromrichter aufweist, der abhängig von der Energieflussrichtung als Gleichrichter oder Wechselrichter arbeitet, dass der bidirektionale Stromrichter (11) einen zweiten, mit dem zweiten Anschluss (A2) verbundenen Stromrichter aufweist, der eingerichtet ist, abhängig von der Energieflussrichtung als Gleichrichter, Wechselrichter oder Umrichter zu arbeiten.

9. Schweißstromquelle nach Anspruch 7 oder 8, **dadurch gekennzeichnet, dass** in der Schweißstromquelle (1) ein Hilfsstromrichter (15) mit einem Hilfsstromrichtereingang (HE) und einem Hilfsstromrichterausgang (HA) vorgesehen ist, wobei der Hilfsstromrichtereingang (HE) mit dem Pufferkondensator (C_{P}) verbunden ist und der Hilfsstromrichterausgang (HA) mit den Ausgangsleitungen (AL1, AL2) verbunden ist.

10. Schweißstromquelle nach Anspruch 9, **dadurch gekennzeichnet, dass** der Hilfsstromrichtereingang (HE) parallel zum Pufferkondensator (C_{P}) geschaltet ist.

11. Verfahren zur Durchführung eines Schweißprozesses mit einem Schweißbrenner (4) mit einer Schweißelektrode, die über eine Schweißleitung (3) mit einer Schweißstromquelle (1) zur Erzeugung einer Schweißspannung (U_{S}) und/oder eines Schweißstromes (I_{S}) verbunden wird, wobei die Schweißspannung (U_{S}) und/oder der Schweißstrom (I_{S}) von der Schweißstromquelle (1) gemäß von Vorgaben des Schweißprozesses erzeugt wird und die Schweißspannung (U_{S}) und/oder der Schweißstrom (I_{S}) an einem Ausgangsanschluss (9) der Schweißstromquelle (1), an dem die Schweißleitung (3) angeschlossen wird, bereitgestellt wird und an einem Eingangsanschluss (10) der Schweißstromquelle (1) eine Spannungsquelle (6) angeschlossen wird, wobei in der Schweißstromquelle (1) ein Schweißleistungsteil (7) über einen Schweißleistungsteileingang (LE) des Schweißleistungsteils (7) eingangsseitig über elektrische Eingangsleitungen (EL1, EL2) mit dem Eingangsanschluss (10) der Schweißstromquelle (1) verbunden wird und über einen Schweißleistungsteilausgang (LA) ausgangsseitig über elektrische Ausgangsleitungen (AL1, AL2) mit dem Ausgangsanschluss (9) der Schweißstromquelle (1) verbunden wird, wobei während der Durchführung des Schweißprozesses zumindest eine der elektrischen Ausgangsleitungen (AL1, AL2) mit einem Schalter (S1, S2) zeitweise geöffnet wird, um während des offenen Schalters (S1, S2) elektrische Energie in einen parallel zum Schalter (S1, S2) geschalteten Pufferkondensator (Cp) zu speichern, **dadurch gekennzeichnet, dass** die im Pufferkondensator (Cp) gespeicherte elektrische Energie mit einem Stromrichter (11), der elektrische Energie von einem ersten, mit dem Pufferkondensator (C_{P}) verbundenen Anschluss (A1) des Stromrichters (11) zu einem zweiten, mit den elektrischen Eingangsleitungen (EL1, EL2) der Schweißstromquelle (1) verbunden Anschluss (A2) des Stromrichters (11) überträgt, in die Eingangsleitungen (EL1, EL2) eingespeist wird.

12. Verfahren nach Anspruch 11, **dadurch gekennzeichnet, dass** mit dem Stromrichter (11) die elektrische Energie in einen parallel zum Schweißleistungsteileingang (LE) in den Eingangsleitungen (EL1, EL2) geschalteten Zwischenkreiskondensator (C) eingespeist wird.

13. Verfahren nach Anspruch 11 oder 12, **dadurch gekennzeichnet, dass** mit dem Stromrichter (11) elektrische Energie vom zweiten Anschluss (A2) zum ersten Anschluss (A1) übertragen wird.

14. Verfahren nach Anspruch 13, **dadurch gekennzeichnet, dass** mit der vom zweiten Anschluss (A2) zum ersten Anschluss (A1) übertragenen elektrischen Energie der Pufferkondensator (C_{P}) auf eine vorgegebene Pufferspannung (U_{P}) vorgeladen wird oder auf der vorgegebenen Pufferspannung (U_{P}) gehalten wird.

15. Verfahren nach Anspruch 13 oder 14, **dadurch gekennzeichnet, dass** mit einem Hilfsstromrichter (15) mit einem mit dem Pufferkondensator (C_{P}) verbundenen Hilfsstromrichtereingang (HE) und einem mit den Ausgangsleitungen (AL1, AL2) der Schweißstromquelle (1) verbundenen Hilfsstromrichterausgang (HA) eine vorgegebene Schweißspannung (U_{S}) am Ausgangsanschluss (9) der Schweißstromquelle (1) erzeugt wird.

16. Verfahren nach Anspruch 13 oder 14, **dadurch gekennzeichnet, dass** mit einem Hilfsstromrichter (15) mit einem mit dem Pufferkondensator (C_{P}) verbundenen Hilfsstromrichtereingang (HE) und einem mit den Ausgangsleitungen (AL1, AL2) der Schweißstromquelle (1) verbundenen Hilfsstromrichterausgang (HA) ein vorgegebener Schweißstrom (I_{S}) am Ausgangsanschluss (9) der Schweißstromquelle (1) erzeugt wird.
